# EUROPÄISCHE PATENTSCHRIFT

(11) **EP 1 188 640 B1**
(45) Veröffentlichungstag und Bekanntmachung des Hinweises auf die Patenterteilung: **02.05.2007**
(21) Anmeldenummer: 01120221.5
(22) Anmeldetag: 23.08.2001
(51) Int. Cl.: B62D 6/00, B62D 5/04

(54) **Vorrichtung und Verfahren zur elektronischen Steuerung eines einem Regelsystem zugeordneten Aktuators in Kraftfahrzeugen**
Apparatus and method for electronically controlling an actuator, arranged in a control system, in motor vehicles
Dispositif et procédé pour commander électroniquement un actionneur assigné à un système de contrôle pour véhicules à moteur

(30) Priorität: 14.09.2000 DE 10045385
(43) Veröffentlichungstag der Anmeldung: 20.03.2002
(73) Patentinhaber: Bayerische Motoren Werke Aktiengesellschaft, 80809 München (DE)
(72) Erfinder: Baumgarten, Götz, Dr., 85757 Karlsfeld (DE)

(56) Entgegenhaltungen:
- DE-A- 19 905 433
- US-A- 4 592 322
- US-A- 5 595 159
- BUENTE TILMAN: "Beitraege zur robusten Lenkregelung von Personenkraftwagen" FORTSCHRITT-BERICHTE VDI. REIHE 12, VERKEHRSTECHNIK / FAHRZEUGTECHNIK, VDI VERLAG, DUESSELDORF, DE, Bd. 12, Nr. 366, 1998, Seiten 65-67,134, XP002200469 ISSN: 0178-9449

## Beschreibung

Die Erfindung betrifft eine Vorrichtung zur elektronischen Steuerung eines einem Regelsystem zugeordneten Aktuators in Kraftfahrzeugen nach dem Oberbegriff des Patentanspruchs 1.

Eine derartige Vorrichtung ist beispielsweise im Zusammenhang mit einem Regelsystem zur Lenkwinkelsteuerung der Vorderräder eines Fahrzeuges aus der DE 4110148 C2 und der DE 19905433 bekannt. Einem derartigen Lenkwinkel-Regelsystem ist als Aktuator beispielsweise ein elektrischer Stellmotor an der Lenksäule zugeordnet. Bei derartigen Vorrichtungen zur elektronischen Steuerung eines einem Regelsystem zugeordneten Aktuators in Kraftfahrzeugen wird grundsätzlich zur Ansteuerung des Aktuators die maximal mögliche Stellgeschwindigkeit im Hinblick auf die Regelgüte, insbesondere im Hinblick auf die Stabilität des Regelkreises, vorgegeben.

Beispielsweise bei einer Überlagerungslenkung mittels eines Lenkwinkel-Regelsystems wird das Fahrverhalten des Kraftfahrzeugs durch einen elektronisch angesteuerten Stellmotor an der Lenksäule verändert, um die Sicherheit und den Fahrkomfort zu erhöhen und um das Zusammenspiel zwischen Fahrer und Fahrzeug zu verbessern. Der durch die Überlagerungslenkung automatisch ausgeführte Lenkeingriff des Regelsystems ist dabei gleichberechtigt zum manuellen Lenkeingriff durch den Fahrer. Ein derartiger Stellmotor kann dabei Lenkeingriffe realisieren, die einem manuellen Lenkwinkel von 100° entsprechen. Vor diesem Hintergrund ist es besonders wichtig, in allen erdenklichen Fehlerfällen die Auswirkungen eines Fehleingriffs des Regelsystems zu begrenzen. Als ungünstigster Fall ist hierbei ein Loslaufen des Stellmotors mit maximaler Stellgeschwindigkeit zu sehen. Dies kann beispielsweise durch einen fehlerhaften Sprung in Messsignalen, die Betriebsparameter bzw. Eingangsgrößen für die Regelfunktionen darstellen, geschehen. Dieser Sprung kann sich als Sprung im Aktuator-Stellkommando des Steuergeräts auswirken, welches wiederum den Aktuator veranlasst, dem neuen Stellkommando so schnell wie möglich, also mit maximaler Stellgeschwindigkeit, zu folgen.

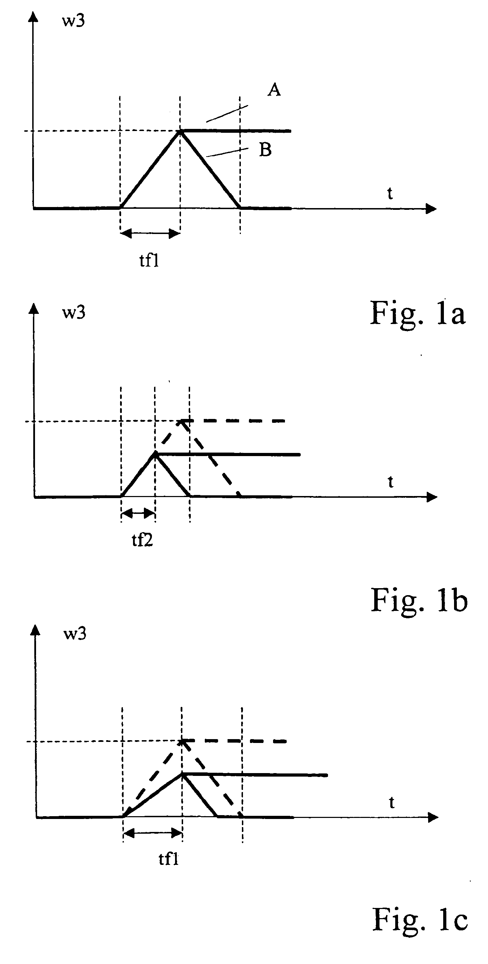

In einem solchen Fall muss eine Fehlererkennungseinheit innerhalb einer genügend kleinen Zeitspanne (Fehlerlatenzzeit) erkennen, dass eine Fehlfunktion vorliegt, und das System sofort abschalten. Das Abschalten kann für den Aktuator bzw. Stellmotor verschiedene Maßnahmen bedeuten (vgl. Fig. 1a):
Maßnahme A: Der Stellmotor kann nicht mehr kontrolliert in eine Abschaltposition gefahren werden. Er kann nur noch in der momentanen Position gestoppt werden. Bei einem Kraftfahrzeug muss in solch einem Fall der Fahrer diesen "Offset-Lenkwinkel" schnell genug korrigieren können.
Maßnahme B: Der mit maximaler Stellgeschwindigkeit "weggelaufene" Stellmotor wird nach Erkennen der Fehlfunktion auf Null (oder eine andere vorgegebene Stellposition) gefahren und dort festgehalten. Die Fehlerlatenzzeit (tf1) stellt hier die wesentliche Größe dar: je höher die Fehlerlatenzzeit ist, desto weiter kann sich der Stellwinkel von seiner Sollposition entfernen und desto größer ist die Richtungs- und Kursabweichung des Fahrzeugs von der Sollbahn beim Beispiel des Lenkwinkel-Regelsystems. Beträgt z. B. die Fehlerlatenzzeit 200 ms, so kann bei einer maximalen Stellgeschwindigkeit von 300°/s ein Lenkwinkel von 60° erreicht werden.

In Fig. 1a ist auf der Abszisse die Zeit t und auf der Ordinate der Lenkwinkel w3 des Aktuators (bei einem Fehleingriff) dargestellt. Die Fläche unter dem Lenkwinkelverlauf in Fig. 1a ist proportional zur Kurswinkelabweichung, die durch den fehlerhaften Stelleingriff am Beispiel des Lenkwinkel-Regelsystems entsteht. Hierbei wird ein lineares Fahrzeugmodel angenommen. Dadurch ergibt sich die Aufgabe, die Fläche unterhalb des Lenkwinkelverlaufs gemäß dem fehlerhaften Stelleingriff über der Zeit möglichst stark zu verkleinern. Fig. 1b zeigt, wie bei beiden Abschaltmaßnahmen A und B eine Verkleinerung der Fehlerlatenzzeit (hier tf2<tf1) die Fläche reduziert. Die Stellverläufe aus Fig. 1a sind in Fig. 1b gestrichelt gezeichnet. Bei der Abschaltmaßnahme B ergibt sich eine endliche Fläche, die durch Reduzierung der Fehlerlatenzzeit verkleinert wird. Im Falle der Abschaltmaßnahme A wächst die Fläche bzw. die Kurswinkelabweichung über der Zeit t zwar weiter an, aber mit verringerter Geschwindigkeit.

Die Fehlerlatenzzeit ergibt sich aus der Rechenzeit, die zur Fehlerüberprüfung bzw. Fehlererkennung von einer Fehlererkennungseinheit im Steuergerät benötigt wird. Somit kann die Fehlerlatenzzeit nicht beliebig verkleinert werden. Weiterhin hängt die Fehlerlatenzzeit auch von der Art der Fehlfunktion ab. Für Fehler im Steuergerät oder in der Aktuatorsteuerung kann beispielsweise eine relativ kleine Fehlerlatenzzeit erreicht werden. Für Fehler in den Messsignalen, z. B. für die Ermittlung der Gierrate oder der Querbeschleunigung, die bei Lenkwinkel-Regelsystemen übliche Betriebsparameter bzw. Messgrößen sind, wovon die Aktuatorsteuerung abhängt, kann die Identifikation eines Fehlers wesentlich schwieriger, und damit die Fehlerlatenzzeit wesentlich größer sein.

Eine mögliche Abhilfe kann darin bestehen, eine Verdoppelung der schwer zu überwachenden Sensoren vorzunehmen und die Signale durch einen gegenseitigen Vergleich zu plausibilisieren. Der Nachteil hierbei besteht in den Kosten für die zusätzlichen Sensoren.

Es ist daher Aufgabe der Erfindung, ohne zusätzliche Kosten die Sicherheit eines Regelsystems bei Auftreten von Fehlern zu erhöhen.

Diese Aufgabe wird durch die Merkmale des Patentanspruchs 1 bzw. 4 vorrichtungs- bzw. verfahrensmäßig gelöst. Vorteilhafte Weiterbildungen der Erfindung sind die abhängigen Patentansprüche.

Der Erfindung liegt die Idee zugrunde, die zeitliche Ableitung des Aktuatorstellkommandos, das insbesondere von den schwierig zu überwachenden Sensorsignalen abhängt, zu begrenzen. Die Erfindung besteht darin, bereits im fehlerfreien Betrieb den Aktuator nur mit reduzierter Stellgeschwindigkeit zu betreiben, beispielsweise mit 70 % der maximal möglichen Stellgeschwindigkeit. Nach Erkennen des Fehlers, also nach Ablauf der Fehlerlatenzzeit (tf1; vgl. Fig. 1c) wird der Aktuator vorzugsweise mit maximal möglicher Stellgeschwindigkeit zur vorgegebenen Stellposition zurückgefahren (Maßnahem A) oder an der gegenwärtigen Position festgehalten (Maßnahme B). Ohne Reduzierung der Fehlerlatenzzeit (tf1) ergibt sich dabei, wie in Fig. 1c dargestellt, eine deutlich reduzierte Fläche unter dem Stellverlauf. In Fig. 1c sind zum Vergleich mit einer Aktuatoransteuerung ohne die Erfindung am Beispiel des Lenkwinkel-Regelsystems die Stellverläufe bzw. die Verläufe des Lenkwinkels w3 des Aktuators von Fig. 1a gestrichelt dargestellt.

Die Reduzierung der maximalen Stellgeschwindigkeit im Normalbetrieb wird durch einen Stellratenbegrenzer zwischen Regelung und Aktuator erreicht.

Ein Regelsystem kann beispielsweise mehrere Teilfunktionen erfüllen, wobei im Steuergerät jeder Teilfunktion eine Regelfunktionseinheit zugeordnet ist. Dabei kann eine erste Gruppe von Teilfunktionen bzw. von Regelfunktionseinheiten nicht von Messsignalen mit großer Fehlerlatenzzeit abhängen, so dass diese Regelfunktionseinheiten den Aktuator mit seiner maximal möglichen Stellgeschwindigkeit betreiben können. Eine zweite Gruppe von Teilfunktionen bzw. von Regelfunktionseinheiten hängt von Signalen ab, die nur mit einer großen Fehlerlatenzzeit überwacht werden können. Bei diesen Regelfunktionseinheiten bzw. Teilfunktionen wird das Stellkommando mit einer Stellratenbegrenzung versehen, so dass die Auswirkungen eines fehlerhaften Eingangssignals nicht zu einem zu schnellen Weglaufen des Aktuators bzw. nicht zu einer zu großen Fläche unter dem Stellverlauf führen. Die Reduzierung der maximalen Stellgeschwindigkeit in der zweiten Gruppe der Teilfunktionen bzw. der Regelfunktionseinheiten mittels der Stellratenbegrenzung wird derart begrenzt, dass die damit verbundenen Leistungseinbussen dieser Teilfunktion nicht stören.

Sollten sich durch das Wirksamwerden der Stellratenbegrenzung Stabilitätsprobleme durch geschlossene Regelkreise ergeben, können Maßnahmen dagegen ergriffen werden, die beispielsweise in der noch nicht veröffentlichten DE 10021856 vorgeschlagen werden.

Der Hauptvorteil der Erfindung liegt darin, dass man bei einer Fehlererkennungseinheit mit einer gegebenen minimalen Fehlerlatenzzeit und einer gegebenen oberen Grenze für die Auswirkungen eines Fehlerfalls erstens ohne Änderungen in der Fehlererkennungseinheit mit Beibehaltung der machbaren Fehlerlatenzzeit auskommt, zweitens nur mit einer kleinen Änderung in den betroffenen Teilfunktionen durch Einfügen einer Stellratenbegrenzung oder eines "intelligenten" Stellratenbegrenzers auskommt und drittens eine Sensorverdoppelung oder eine aufwendige Weiterentwicklung des Algorithmus zur Fehlererkennungseinheit oder andere kostspielige Alternativmaßnahmen vermieden werden können.

In der Zeichnung ist ein Ausführungsbeispiel der Erfindung dargestellt. Es zeigen am Beispiel eines Lenkwinkel-Regelsystems
- Fig. 1a: einen Stellverlauf bei großer Fehlerlatenzzeit ohne die Erfindung
- Fig. 1b: einen Stellverlauf bei kleiner Fehlerlatenzzeit ohne die Erfindung
- Fig. 1c: einen Stellverlauf bei großer Fehlerlatenzzeit mit der Erfindung und
- Fig. 2: eine erfindungsgemäße Vorrichtung in einem Steuergerät.

Die Auswirkungen der Erfindung wurden bereits im Zusammenhang mit den Figuren 1a bis 1c beschrieben.

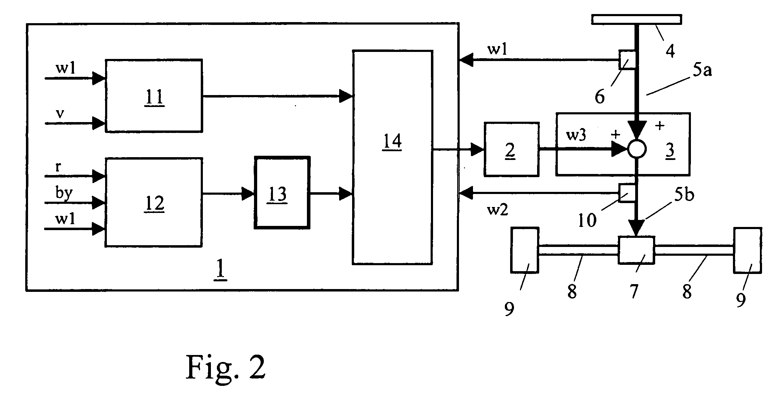

In Figur 2 ist eine Lenkanordnung dargestellt, die ein Lenkrad 4 umfasst, das mit einem ersten Teil einer Lenksäule 5a verbunden ist. Der erste Teil der Lenksäule 5a ist über ein Getriebe 3 mit einem zweiten Teil der Lenksäule 5b verbunden. Der zweite Teil der Lenksäule 5b endet in einem Servogetriebe 7, das eine Verbindung zu einem Lenkgestänge 8 herstellt. Über das Lenkgestänge 8 werden Räder 9 in bekannter Weise verstellt. Am ersten Teil der Lenksäule 5a ist ein Sensor 6 angeordnet, der den vom Fahrer mittels des Lenkrades 4 manuell ausgeführten Lenkwinkel w1 aufnimmt und an ein Steuergerät 1 weitergibt. Das Steuergerät 1 erhält ferner einen Summenlenkwinkel w2, der mittels eines am zweiten Teil der Lenksäule 5b angeordneten Sensors 10 erfasst wird. Der Summenlenkwinkel w2 ergibt sich aus der Addition des manuell ausgeführten Lenkwinkels w1 und eines automatisch ausgeführten Lenkwinkels w3. Der Lenkwinkel w3 wird mittels des Getriebes 3 über einen Aktuator 2 eingestellt. Der Aktuator 2 wird über ein Ausgangssignal des Steuergerätes 1, das insbesondere auch die Stellgeschwindigkeit des Aktuators 2 vorgibt, angesteuert.

Das Steuergerät 1 umfasst im dargestellten Beispiel 2 Regelfunktionseinheiten 11 und 12. Die Regelfunktionseinheit 11 erhält als Eingangssignale den manuellen Lenkwinkel w1 und die Fahrzeuggeschwindigkeit v. Die Regelfunktionseinheit 11 ist für eine Teilfunktion des Lenkwinkel-Regelsystems zuständig, das dem Fahrer abhängig vom manuellen Lenkwinkel w1 und der Fahrzeuggeschwindigkeit v einen Teilwinkel des automatischen Lenkwinkels w3 für eine Lenkhilfe zur Verfügung stellt. Diese Teilfunktion hängt nicht von Messsignalen mit einer großen Fehlerlatenzzeit ab. Das heißt, die Rechenzeit zur Fehlererkennung in der Regelfunktionseinheit 11 auch im Hinblick auf die Fehlerüberprüfung der Eingangssignale w1 und v ist kleiner als eine vorgegebene Rechenzeitschwelle. Die Ansteuerung des Aktuators abhängig von dieser Regelfunktionseinheit 11 kann also mit maximal möglicher Stellgeschwindigkeit vorgenommen werden. Das Ausgangssignal der Regelfunktionseinheit 11 wird daher ohne zeitliche Begrenzung einer Additionsstelle 14 zugeführt, die dieses Ausgangssignal an den Aktuator 2 direkt weitergibt.

Weiterhin umfasst das Steuergerät 1 eine Regelfunktionseinheit 12. Die Regelfunktionseinheit 12 erhält als Eingangssignale die Gierrate r, die Querbeschleunigung by und den manuellen Lenkwinkel w1. Die Regelfunktionseinheit 12 führt beispielsweise einen Lenkwinkeleingriff zur Fahrzeugstabilisierung bei Kurvenfahrt durch. Die Fehlerüberprüfung und damit die Fehlererkennung im Hinblick auf die Messsignale, die zur Bildung der Gierrate r und der Querbeschleunigung by herangezogen werden, benötigt eine Rechenzeit, die größer als eine vorgegebene Rechenzeitschwelle ist. Die Regelfunktionseinheit 12 ist somit einer Teilfunktion mit großer Fehlerlatenzzeit zugeordnet. Die große Fehlerlatenzzeit ergibt sich insbesondere durch die notwendige Plausibilitätsüberwachung der Messsignale eines Gierraten- und eines Querbeschleunigungssensors mittels des Summenlenkwinkels w2. Das Ausgangssignal der Regelfunktionseinheit 12 führt daher zu einem Stellratenbegrenzer 13, durch den die von der Regelfunktionseinheit 12 vorgegebene, üblicherweise maximal mögliche Soll-Stellgeschwindigkeit zur Ansteuerung des Aktuators 2 auf einen definierten Begrenzungswert reduzierbar ist. ,

Erfindungsgemäß kann der definierte Begrenzungswert ein fester, oder auch ein von bestimmten Betriebsparametern abhängiger variabler Wert sein. Die Reduzierung der Stellgeschwindigkeit durch den Stellratenbegrenzer kann auch abhängig von bestimmten Betriebsbedingungen ausschaltbar sein, indem beispielsweise der definierte Begrenzungswert zeitweise auf unendlich gesetzt werden kann. Das Ausgangssignal der Regelfunktionseinheit 12 wird also als ein im Hinblick auf die Stellgeschwindigkeit reduzierter Sollwert an die Additionsstelle 14 und schließlich an den Aktuator 2 weitergegeben.

Im Steuergerät 1 können mehrere Teilfunktionen mit großer Fehlerlatenzzeit und/oder mehrere Teilfunktionen mit kleiner Fehlerlatenzzeit vorgesehen sein. Zwar könnte aus Sicht der Sicherheit bei allen Teilfunktionen bzw.

Regelfunktionseinheiten eine Stellratenbegrenzung durchgeführt werden, dadurch würde jedoch die im fehlerfreien Fall wünschenswerte hohe Regelgeschwindigkeit in einigen Fällen unnötig verschlechtert werden. Grundsätzlich gilt erfindungsgemäß daher, dass alle Ausgangsgrößen der Regelfunktionseinheiten, die insbesondere Teilfunktionen mit großer Fehlerlatenzzeit ausführen, eine Stellratenbegrenzung erfahren. Durch diesen Kern der Erfindung wird eine Erhöhung der Sicherheit, nicht nur bei Lenkwinkel-Regelsystemen, sondern auch bei allen vergleichbaren Regelsystemen mit elektronisch gesteuerten Aktuatoren erreicht.

## Patentansprüche

1. Vorrichtung zur elektronischen Steuerung eines einem Regelsystem zugeordneten Aktuators in Kraftfahrzeugen mit einem Steuergerät, das mindestens eine Regelfunktionseinheit aufweist, durch die der Aktuator abhängig von mindestens einem Betriebsparameter mit einer vorgegebenen Stellgeschwindigkeit ansteuerbar ist, **dadurch gekennzeichnet, dass** das Steuergerät (1) einen mindestens einer Regelfunktionseinheit (12) zugeordneten Stellratenbegrenzer (13) aufweist, durch den die von der Regelfunktionseinheit (12) vorgegebene Soll-Stellgeschwindigkeit zur Ansteuerung des Aktuators (2) auf einen definierten Begrenzungswert reduzierbar ist.

2. Vorrichtung nach Patentanspruch 1, **dadurch gekennzeichnet, dass** der Stellratenbegrenzer (13) zwischen der Regelfunktionseinheit (12) und dem Aktuator (2) angeordnet ist.

3. Vorrichtung nach Patentanspruch 1 oder 2, **dadurch gekennzeichnet, dass** das Steuergerät (1) mindestens zwei Regelfunktionseinheiten (11, 12) aufweist und dass ein Stellratenbegrenzer (13) nur einer Regelfunktionseinheit (12) zugeordnet ist, die zur Fehlererkennung mehr als eine vorgegebene Rechenzeit (große Fehlerlatenzzeit) benötigt.

4. Verfahren zur elektronischen Steuerung eines einem Regelsystem zugeordneten Aktuators in Kraftfahrzeugen mittels einer Vorrichtung nach einem der Patentansprüche 1 bis 3.

## Claims

1. A device for the electronic control of an actuator associated with a control system in motor vehicles comprising a control unit, which has at least one control function unit, by which the actuator can be activated as a function of at least one operating parameter at a defined adjusting speed, **characterised in that** the control unit (1) has at least one adjusting rate limiting device (13) associated with a control function unit (12), by means of which adjusting rate limiting device the desired adjusting speed for controlling the actuator (2), defined by the control function unit (12), can be reduced to a defined limit value.

2. A device according to claim 1, **characterised in that** the adjusting rate limiting device (13) is arranged between the control function unit (12) and the actuator (2).

3. A device according to claim 1 or 2, **characterised in that** the control unit (1) has at least two control function units (11, 12) and **in that** an adjusting rate limiting device (13) is associated with only one control function unit (12), which requires more than a defined computing time (long fault latency period) for fault detection.

4. A method for the electronic control of an actuator associated with a control system in motor vehicles by means of a device according to any one of claims 1 to 3.

## Revendications

1. Dispositif pour commander électroniquement un actionneur affecté à un système de contrôle dans des véhicules à moteur, qui comporte un appareil de commande présentant au moins une unité fonctionnelle de contrôle qui peut commander l'actionneur à une vitesse de déplacement prédéfinie en fonction d'au moins un paramètre de fonctionnement,
**caractérisé en ce que**
l'appareil de commande (1) présente un limiteur de taux de réglage (13) affecté à au moins une unité fonctionnelle de contrôle (12) et qui permet de réduire à une valeur limite définie la vitesse de réglage de consigne prédéfinie par l'unité fonctionnelle de contrôle (12), pour commander l'actionneur (2).

2. Dispositif selon la revendication 1,
**caractérisé en ce que**
le limiteur de taux de réglage (13) est monté entre l'unité fonctionnelle de contrôle (12) et l'actionneur (2).

3. Dispositif selon la revendication 1 ou 2,
**caractérisé en ce que**
l'appareil de commande (1) présente au moins deux unités fonctionnelles de contrôle (12) et un limiteur de taux de réglage (13) est affecté à seulement une unité fonctionnelle de contrôle (12) qui a besoin pour détecter le défaut de plus qu'un temps de calcul prédéfini (temps de réponse au défaut long).

4. Procédé pour la commande électronique d'un actionneur affecté à un système de contrôle dans les véhicules automobiles, par mise en oeuvre d'un dispositif selon une des revendications 1 à 3.
